# EUROPEAN PATENT SPECIFICATION

(11) **EP 2 798 171 B1**
(45) Date of publication and mention of the grant of the patent: **24.02.2016**
(21) Application number: 12813059.8
(22) Date of filing: 12.12.2012
(51) Int. Cl.: F02B 29/04, F02B 37/00, F02B 37/007, F02B 37/013

(54) **RECIPROCATING ENGINE**
HUBKOLBENMOTOR
MOTEUR ALTERNATIF

(30) Priority: 14.12.2011 FI 20116268
(43) Date of publication of application: 05.11.2014
(73) Proprietor: Wärtsilä Finland Oy, 65380 Vaasa (FI)
(72) Inventor: MÄKI, Janne, FI-65280 Vaasa (FI)
(74) Representative: Berggren Oy Ab
(86) International application number: PCT/FI2012/051228
(87) International publication number: WO 2013/087990

(56) References cited:
- WO-A1-2009/147286
- DE-A1- 10 118 951
- GB-A- 2 069 593
- US-A1- 2002 056 444

## Description

The invention relates to a reciprocating engine comprising a low-pressure turbocharger and a high-pressure turbocharger, which are supported to a bracket attached to an engine block.

In large turbocharged reciprocating engines, which are employed in power plants and as main and auxiliary engines of ships, supercharging is often carried out in two stages, first by a low-pressure charger and then by a high-pressure charger. Between the supercharging stages and after the high-pressure charger, the charge air is cooled before conducting it to the cylinders of the engine. The supercharging can be carried out at as many as three separate stages. In large engines, the turbochargers and charge air coolers are large-size and they are difficult to place in connection with the engine. It is particularly problematic in V-engines, in which both cylinder rows may have a low-pressure turbocharger, a high-pressure turbocharger and low and high pressure charge air coolers of their own.

WO 2009/147286 discloses a reciprocating engine having cylinders arranged in V-configuration. The engine is turbocharged in two stages and comprises two low pressure and two high pressure charge air coolers. The turbochargers are placed on a bracket, which is attached to the other end of the engine block. The bracket comprises low and high pressure spaces, in which the charge air coolers are placed side by side. The charge air coolers can be serviced and removed from the pressure spaces through the bracket end. This, however, may be difficult if the free space at the engine and bracket end is limited.

An object of the invention is to provide an improved solution for placing the turbochargers and charge air coolers in connection with the reciprocating engine.

The objects of the invention can be achieved by the solution described in claim 1. A reciprocating engine according to the invention comprises an engine block, at least one low-pressure turbocharger and two high-pressure turbochargers, two low-pressure charge air coolers for cooling low-pressure charge air pressurized by the low-pressure turbocharger(s) and two high-pressure charge air coolers for cooling high-pressure charge air pressurized by the high-pressure turbochargers. A bracket is attached to a first end of the engine block, to which bracket the low-pressure turbocharger(s) and two high-pressure turbochargers are supported. The bracket comprises two adjacent high-pressure chambers for the charge air pressurized by the high-pressure turbochargers, in which high-pressure chambers the high-pressure charge air coolers are arranged. Further, the low-pressure charge air coolers are placed in casings, which are releasably attached to the bracket on both sides of the high-pressure chambers.

The invention provides considerable advantages. The turbochargers and charge air coolers are supported or attached to the bracket, due to which the turbocharger equipment can be easily placed in connection with the engine. The connecting channels between the components can be rendered short, reducing the mass of the turbocharger equipment. The centre of gravity of the bracket can be placed close to the engine block, which reduces the vibration problems of the turbocharger equipment. In that case, both the turbocharger equipment and the engine operate in a better and more reliable manner.

The low-pressure charge air coolers are placed in the casings, which are releasably attached to the bracket on both sides of the high-pressure chambers. Thus, the casings with low-pressure charge air coolers can be detached from the bracket, after which the high-pressure charge air coolers can be removed from the high-pressure chambers from the sides of the engine. This enables the use of two stage turbocharging in applications where free space in the longitudinal direction of the engine (i.e. at engine ends) is limited, e.g. in some ship installations. Also the low-pressure charge air coolers, which collect a lot of dirt and other contaminants from the charge air, can be easily detached from the bracket for cleaning and service. Additionally, the invention can be utilized when existing engines are upgraded to two stage turbocharging.

According to an embodiment of the invention, the bracket with charge air coolers is attached to the engine block end, from which the crankshaft protrudes. Typically a generator or gearbox is connected to the crankshaft end, which makes it difficult to remove the charge air coolers from the generator/gearbox side of the bracket. In this embodiment the casings with low-pressure charge air coolers can be detached from the bracket, after which the high-pressure charge air coolers can be removed from the high-pressure chambers from the sides of the engine, between the first end of the engine block and the generator/gearbox.

In the following, the invention is described in an exemplary manner and with reference to the appended drawings, wherein:
Fig. 1 is a schematic view of the reciprocating engine turbocharged at two stages.
Fig. 2 shows a partial side view of the reciprocating engine of Fig. 1, and the bracket attached to the first end of the engine block.
Fig. 3 shows the bracket of fig. 2 having low-pressure charge air coolers attached to both sides of the high-pressure chambers.
Fig. 4 shows the bracket of fig. 3 without the low-pressure charge air coolers.
Fig. 5 shows the bracket of figs. 2-4.

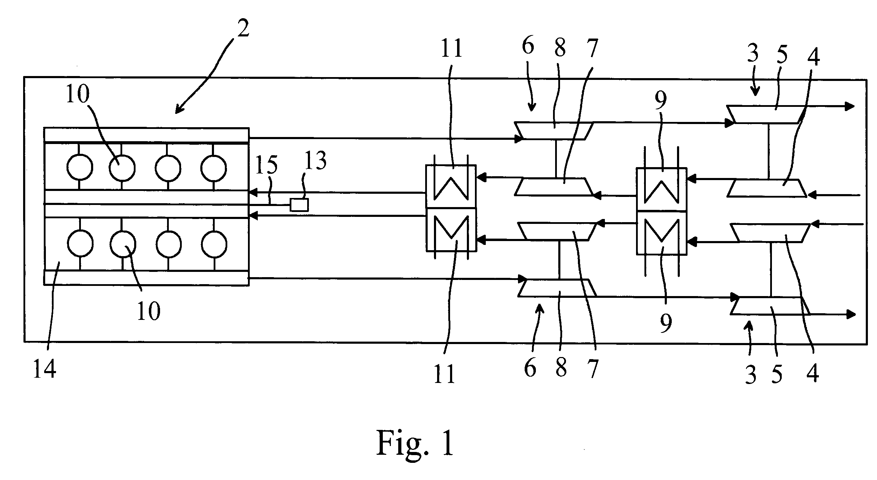

Fig. 1 is a schematic view of the reciprocating engine 2 that is turbocharged at two stages. The engine is a large reciprocating engine that is used, for example, as a main or an auxiliary engine of a ship or in power plant for producing electricity at a power plant. In fig. 1 is shown eight cylinders 10, but typically the engine 2 comprises at least 14 cylinders, for example 16-20 cylinders. The cylinders 10 are arranged in a V-configuration.

The engine 2 comprises two low-pressure turbochargers 3, each of them being provided with a low-pressure compressor 4 and a low-pressure turbine 5. The engine 2 further comprises two high-pressure turbochargers 6, each of them being provided with a high-pressure compressor 7 and a high-pressure turbine 8. The low-pressure turbochargers 3 are of an axial type and the high-pressure turbochargers 6 are of a radial type. Between the low-pressure compressors 4 and the high-pressure compressors 7, there are two low-pressure charge air coolers 9, which cool the charge air pressurized by the low-pressure compressors 4, before conducting it to the high-pressure compressors 7. Between the high-pressure compressors 7 and the engine cylinders 10, there are two high-pressure charge air coolers 11, which cool the charge air pressurized by the high-pressure compressors 7 before conducting it to the cylinders 10. Alternatively, the engine 2 can be provided with only one low-pressure turbocharger 3 and two high-pressure turbochargers 6. Also in this case, the engine 2 comprises two low-pressure charge air coolers 9 and two high-pressure charge air coolers 11.

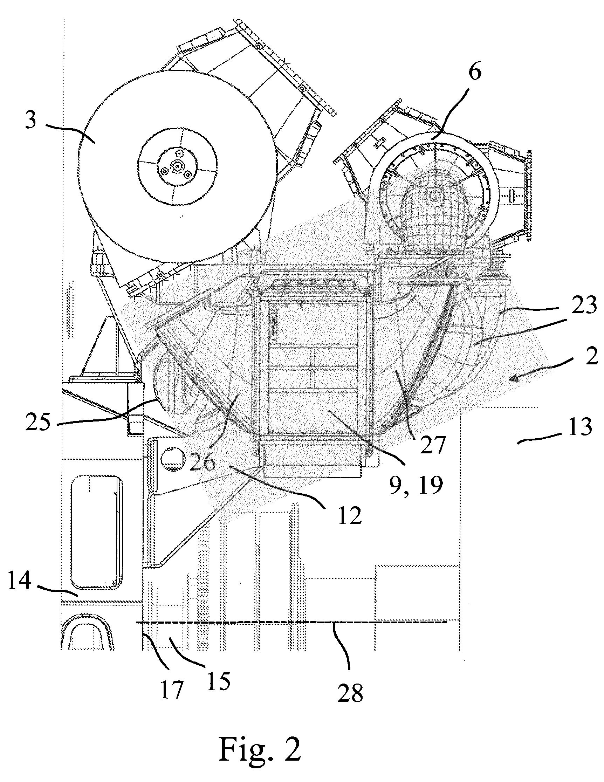

Fig. 2 shows a partial side view of the reciprocating engine of fig. 1. The engine 2 comprises an engine block 14 and a crankshaft 15, which is mounted in the engine block 14. One end of the crankshaft (flywheel end) protrudes from a first end 17 of the engine block 14. A gearbox or generator 13 is connected to the crankshaft 15.

A bracket 12 is attached to the first end 17 of the engine block 14. The bracket 12 can be supported to a top surface of the engine block 14. The bracket 12 is attached above the crankshaft 15. The bracket 12 is arranged between the first end 17 of the engine block and the gearbox/generator 13. The bracket 12 can be a casting. The low-pressure turbocharger(s) 3 and the high-pressure turbochargers 6 are supported to or mounted on the bracket 12. The low-pressure turbochargers 3 are placed side by side and closer to the engine block 14 than the high-pressure turbochargers 6. The low-pressure turbochargers 3 are partly located above the engine block 14.

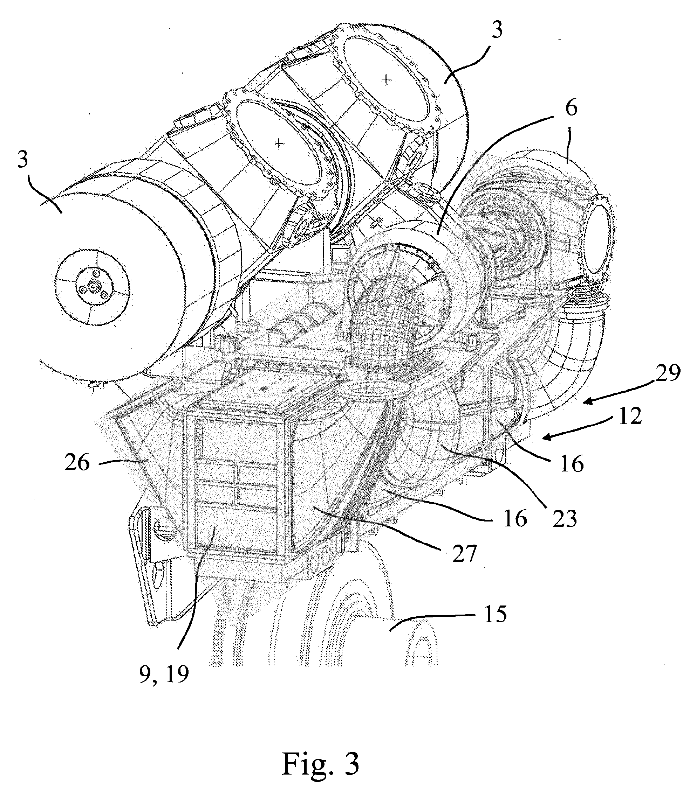

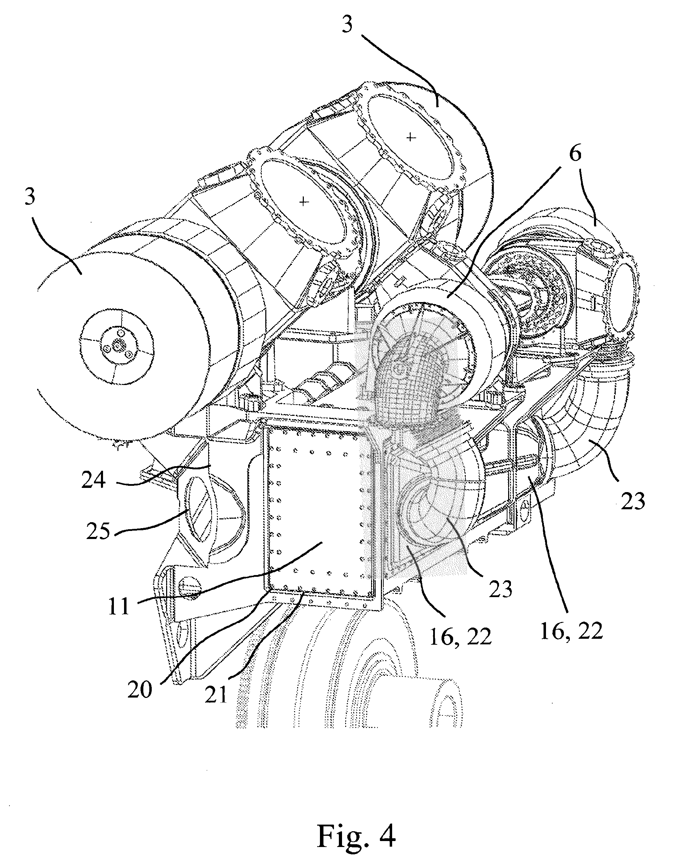

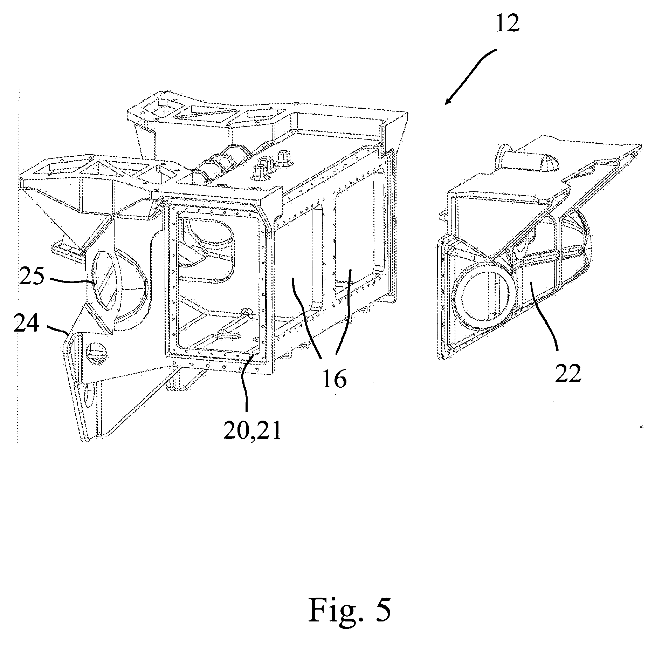

The bracket of fig. 2 is shown in more detail in figs. 3-5. The bracket 12 comprises two adjacent high-pressure chambers 16 for the charge air pressurized by the high-pressure turbochargers 6. The high-pressure charge air coolers 11 are arranged in the high-pressure chambers 16. The high-pressure chambers 16 are integral parts of the bracket 12. The high-pressure chambers 16 can have a common partition wall 17.

The low-pressure charge air coolers 9 are placed in the casings 19, which are releasably attached to the bracket 12 on both sides of the high-pressure chambers 16. The casings 19 can be attached to the bracket 12 by means of screws. The high pressure chambers 16 comprise side walls 20, which face the low-pressure charge air coolers 9. The side walls 20 are provided with openings 21, through which the high-pressure charge air coolers 11 can be removed from and inserted into the high pressure chambers 16. The high-pressure chambers 16 comprise front walls 22, which face the gearbox/generator 13. The front walls 22 are provided with inlet connections 23 for high pressure charge air. Further, the high-pressure chambers 16 comprise back walls 24, which face the engine block 14. The back walls 24 are provided with outlet connections 25 for high pressure charge air. The casings 19 of the low pressure charge air coolers 9 are provided with inlet connections 26 and outlet connections 27 for low pressure charge air. The inlet connection 26 is located on the back wall of the casing. The outlet connection 27 is located on the front wall of the casing.

Inlet and outlet connections for cooling liquid are arranged in the bottom walls of the casings 9 and high-pressure chambers 16. The low-pressure charge air coolers 9 are connected to the low and/or high temperature cooling circuit of the engine. The high-pressure charge air coolers 11 are connected to low temperature cooling circuit of the engine.

The outlets of the low-pressure compressors 4 are connected to the inlet connections 26 of the casings 19. The outlet connections 27 of the casings are connected to the inlets of the high-pressure compressors 7. The outlets of the high-pressure compressors are connected to the inlet connections 23 of the high-pressure chambers 16. The outlet connections 25 of the high pressure chambers are connected to inlet channels leading to the cylinders 10.

The low-pressure charge air coolers 9 and the high-pressure charge air coolers 11 are arranged in a cooler row 29. The high-pressure charge air coolers 11 are in the middle and the low-pressure charge air coolers 9 at both ends of the cooler row 29. The cooler row 29 is arranged transversely to the rotation axis 28 of the crankshaft 15. The cooler row 29 is arranged horizontally.

When the engine 2 is running, the combustion air is conducted to the low-pressure compressors 4, by which its pressure is raised. Thereafter, the low-pressure charge air is conducted to the casings 19, where it is cooled by the low-pressure charge air coolers 9. The cooled charge air is conducted from the casings 19 to the high-pressure compressors 7, by which the pressure of the charge air is further raised. Thereafter, the high-pressure charge air is conducted to the high-pressure chambers 16 and cooled by the high-pressure charge air coolers 11. The cooled high-pressure charge air is conducted from the high-pressure chambers 16 to the cylinders 10 to be used as combustion air. The charge air is cooled by the coolant of the engine that is conducted to the charge air coolers 9, 11. Exhaust gas is conducted from the cylinders 10 through the high-pressure turbines 8 and then through the low-pressure turbines 5. The high-pressure turbine 8 drives the high-pressure compressor 7 and the low-pressure turbine 5 drives the low-pressure compressor 4.

In order to remove the high-pressure coolers 11 from the high-pressure chambers 16, the casings 19 with low pressure charge air coolers 9 are detached from the bracket 12. Thereafter, the high-pressure charge air coolers 11 are removed from the high-pressure chambers 16 through the openings 21. The high-pressure charge air coolers 11 can be removed from the side of the engine 2, between the first end 17 and the gearbox/generator 13.

The invention comprises embodiments that deviate from the above.

The bracket 12 shown in the drawings can be utilized in other type types of engines as well. For example, in case the engine is provided with only one low pressure charge air cooler and only one high pressure charge air cooler, the low pressure charge air cooler can be placed in one high pressure chamber and the high pressure charge air cooler in the other high pressure chamber 16 of the bracket.

## Claims

1. A reciprocating engine (2) comprising:
- an engine block (14),
- at least one low-pressure turbocharger (3) and two high-pressure turbochargers (6),
- two low-pressure charge air coolers (9) for cooling low pressure charge air pressurized by the low-pressure turbocharger(s) (3) and two high-pressure charge air coolers (11) for cooling high pressure charge air pressurized by the high-pressure turbochargers (6), and
- a bracket (12) attached to a first end (17) of the engine block (14), to which bracket (12) the low-pressure turbocharger(s) (3) and the high-pressure turbochargers (6) are supported, which bracket (12) comprises two adjacent high-pressure chambers (16) for the charge air pressurized by the high-pressure turbochargers (6), in which high-pressure chambers (16) the high-pressure charge air coolers (11) are arranged, **characterized in that** the low-pressure charge air coolers (9) are placed in casings (19), which are releasably attached to the bracket (12) on both sides of the high-pressure chambers (16).

2. The reciprocating engine (2) according to claim 1, **characterized in that** the low-pressure (9) and high-pressure (11) charge air coolers are arranged in a cooler row (29) so that the high-pressure charge air coolers (11) are in the middle and the low-pressure charge air coolers (9) on both ends of the cooler row (29).

3. The reciprocating engine (2) according to claim 1, **characterized in that** a crankshaft (15) is mounted in the engine block (14), which crankshaft (15) is arranged to protrude from the first end (17) of the engine block (14).

4. The reciprocating engine (2) according to claim 3, **characterized in that** the cooler row (29) is arranged transversely to a rotation axis (28) of the crankshaft (15).

5. The reciprocating engine (2) according to any of the preceding claims, **characterized in that** the high-pressure chambers (16) comprise side walls (20) facing the low-pressure charge air coolers (9), which the side walls (20) are provided with openings (21), through which the high-pressure charge air coolers (11) can be removed from and inserted into the high-pressure chambers (16).

6. The reciprocating engine (2) according to any of the preceding claims, **characterized in that** bottom walls of the high-pressure chambers (16) are provided with inlet and outlet connections for cooling liquid.

7. The reciprocating engine (2) according to any of the preceding claims, **characterized in that** a gearbox or a generator (13) is connected to the crankshaft (15).

8. The reciprocating engine (2) according to any of the preceding claims, **characterized in that** inlet connections (23) for high pressure charge air are arranged on front walls (22) of the high-pressure chambers (16).

9. The reciprocating engine (2) according to any of the preceding claims, **characterized in that** outlet connections (25) for high pressure charge air are arranged on back walls (24) of the high-pressure chambers (16).

10. The reciprocating engine (2) according to any of the preceding claims, **characterized in that** inlet connections (26) for low pressure charge air are arranged on back walls of the casings (19).

11. The reciprocating engine (2) according to any of the preceding claims, **characterized in that** outlet connections (27) for low pressure charge air are arranged on front walls of the casings (19).

12. The reciprocating engine (2) according to any of the preceding claims, **characterized in that** the casings (19) and low-pressure charge air coolers (9) can be removed from the sides of the engine, between the first end (17) and the gearbox/generator (13).

## Patentansprüche

1. Hubkolbenmotor (2), umfassend:
- einen Motorblock (14),
- wenigstens einen Niederdruck-Turbolader (3) und zwei Hochdruck-Turbolaser (6),
- zwei Niederdruckladeluftkühler (9) zum Kühlen von Niederdruckladeluft, die durch den (die) Niederdruck-Turbolader (3) mit Druck beaufschlagt wird, und zwei Hochdruckladeluftkühler (11) zum Kühlen von Hochdruckladeluft, die durch die Hochdruck-Turbolader (6) mit Druck beaufschlagt wird, und
- eine Halterung (12), die an einem ersten Ende (17) des Motorblocks (14) angebracht ist, wobei der (die) Niederdruck-Turbolader (3) und die Hochdruck-Turbolader (6) durch die Halterung (12) getragen werden, wobei die Halterung (12) zwei benachbarte Hochdruckkammern (16) für die Ladeluft, die durch die Hochdruck-Turbolader (6) mit Druck beaufschlagt wird, umfasst, wobei die Hochdruckladeluftkühler (11) in den Hochdruckkammern (16) angeordnet sind, **dadurch gekennzeichnet, dass** die Niederdruckladeluftkühler (9) in Gehäusen (19) angeordnet sind, die an beiden der Hochdruckkammern (16) lösbar an der Halterung (12) angebracht sind.

2. Hubkolbenmotor (2) nach Anspruch 1, **dadurch gekennzeichnet, dass** die Niederdruck- (9) und die Hochdruck-(11)-ladeluftkühler so in einer Kühlerreihe (29) angeordnet sind, dass sich die Hochdruckladeluftkühler (11) in der Mitte und die Niederdruckladeluftkühler (9) an beiden Enden der Reihe befinden.

3. Hubkolbenmotor (2) nach Anspruch 1, **dadurch gekennzeichnet, dass** in dem Motorblock (14) eine Kurbelwelle (15) angebracht ist, wobei die Kurbelwelle (15) so eingerichtet ist, dass sie von dem ersten Ende (17) des Motorblocks (14) vorspringt.

4. Hubkolbenmotor (2) nach Anspruch 3, **dadurch gekennzeichnet, dass** die Kühlerreihe (29) quer zu einer Drehachse (18) der Kurbelwelle (15) angeordnet ist.

5. Hubkolbenmotor (2) nach einem der vorhergehenden Ansprüche, **dadurch gekennzeichnet, dass** die Hochdruckkammern (16) Seitenwände (20) umfassen, die zu den Niederdruckladeluftkühlern (9) gewandt sind, wobei die Seitenwände (20) mit Öffnungen (21) versehen sind, durch die die Hochdruckladeluftkühler (11) aus den Hochdruckkammern (16) entfernt und in diese eingesetzt werden können.

6. Hubkolbenmotor (2) nach einem der vorhergehenden Ansprüche, **dadurch gekennzeichnet, dass** Bodenwände der Hochdruckkammern (16) mit Einlass- und Auslassanschlüssen für Kühlflüssigkeit versehen sind.

7. Hubkolbenmotor (2) nach einem der vorhergehenden Ansprüche, **dadurch gekennzeichnet, dass** ein Getriebekasten oder ein Generator (13) mit der Kurbelwelle (15) verbunden ist.

8. Hubkolbenmotor (2) nach einem der vorhergehenden Ansprüche, **dadurch gekennzeichnet, dass** an Vorderwänden (22) der Hochdruckkammern (16) Einlassanschlüsse (23) für Hochdruckladeluft eingerichtet sind.

9. Hubkolbenmotor (2) nach einem der vorhergehenden Ansprüche, **dadurch gekennzeichnet, dass** an Rückwänden (24) der Hochdruckkammern (16) Auslassanschlüsse (25) für Hochdruckladeluft eingerichtet sind.

10. Hubkolbenmotor (2) nach einem der vorhergehenden Ansprüche, **dadurch gekennzeichnet, dass** an Rückwänden der Gehäuse (19) Einlassanschlüsse (26) für Niederdruckladeluft eingerichtet sind.

11. Hubkolbenmotor (2) nach einem der vorhergehenden Ansprüche, **dadurch gekennzeichnet, dass** an Vorderwänden der Gehäuse (19) Auslassanschlüsse (27) für Niederdruckladeluft eingerichtet sind.

12. Hubkolbenmotor (2) nach einem der vorhergehenden Ansprüche, **dadurch gekennzeichnet, dass** die Gehäuse (19) und die Niederdruckladeluftkühler (9) zwischen dem ersten Ende (17) und dem Getriebekasten/Generator (13) von den Seiten des Motors abgenommen werden können.

## Revendications

1. Moteur alternatif (2) comprenant :
- un bloc-moteur (14),
- au moins un turbocompresseur à basse pression (3) et deux turbocompresseurs à haute pression (6),
- deux refroidisseurs à air de suralimentation à basse pression (9) pour l'air de suralimentation à basse pression pressurisé par le(s) turbocompresseur(s) à basse pression (3) et deux refroidisseurs à air de suralimentation à haute pression (11) pour refroidir l'air de suralimentation à haute pression pressurisé par les turbocompresseurs à haute pression (6), et
- un support (12) fixé à une première extrémité (17) du bloc-moteur (14), support (12) sur lequel sont supportés le(s) turbocompresseur (s) à basse pression (3) et les turbocompresseurs à haute pression (6), lequel support (12) comprend deux chambres à haute pression adjacentes (16) pour l'air de suralimentation pressurisé par les turbocompresseurs à haute pression (6), chambres à haute pression (16) dans lesquelles les refroidisseurs à air de suralimentation à haute pression (11) sont agencés, **caractérisé en ce que** les refroidisseurs à air de trubocompression à basse pression (9) sont placés dans des enceintes (19) qui sont fixées pouvant être libérées au support (12) sur les deux côtés des chambres à haute pression (16).

2. Moteur alternatif (2) selon la revendication 1, **caractérisé en ce que** les refroidisseurs à air de suralimentation basse pression (9) et haute pression (11) sont agencés dans une rangée de refroidisseurs (29) de manière que les refroidisseurs à air de suralimentation à haute pression (11) sont au centre et les refroidisseurs à air de suralimentation à basse pression (9) aux deux extrémités de la rangée de refroidisseurs (29).

3. Moteur alternatif (2) selon la revendication 1, **caractérisé en ce qu'**un vilebrequin (15) est monté dans le bloc-moteur (14), lequel vilebrequin (15) est agencé pour faire saillie de la première extrémité (17) du bloc-moteur (14).

4. Moteur alternatif (2) selon la revendication 3, **caractérisé en ce que** la rangée de refroidisseurs (29) est agencée transversalement à un axe de rotation (28) du vilebrequin (15).

5. Moteur alternatif (2) selon l'une quelconque des revendications précédentes, **caractérisé en ce que** les chambres à haute pression (16) comprennent des parois latérales (20) faisant face aux refroidisseurs à air de suralimentation à basse pression (9), lesquelles parois latérales (20) sont dotées d'ouvertures (21) à travers lesquelles les refroidisseurs à air de suralimentation à haute pression (11) peuvent être retirés et insérés dans les chambres à haute pression (16).

6. Moteur alternatif (2) selon l'une quelconque des revendications précédentes, **caractérisé en ce que** les parois de fond des chambres à haute pression (16) sont dotées de raccords d'admission et de sortie pour le liquide de refroidissement.

7. Moteur alternatif (2) selon l'une quelconque des revendications précédentes, **caractérisé en ce qu'**une transmission ou un générateur (13) est raccordé au vilebrequin (15).

8. Moteur alternatif (2) selon l'une quelconque des revendications précédentes, **caractérisé en ce que** les raccords d'admission (23) pour l'air de suralimentation à haute pression sont agencés sur les parois avant (22) des chambres à haute pression (16).

9. Moteur alternatif (2) selon l'une quelconque des revendications précédentes, **caractérisé en ce que** les raccords de sortie (25) pour l'air de suralimentation à haute pression sont agencés sur les parois arrière (24) des chambres à haute pression (16).

10. Moteur alternatif (2) selon l'une quelconque des revendications précédentes, **caractérisé en ce que** les raccords d'admission (26) pour l'air de suralimentation à basse pression sont agencés sur les parois arrière des enceintes (19).

11. Moteur alternatif (2) selon l'une quelconque des revendications précédentes, **caractérisé en ce que** les raccords de sortie (27) pour l'air de suralimentation à basse pression sont agencés sur les parois avant des enceintes (19).

12. Moteur alternatif (2) selon l'une quelconque des revendications précédentes, **caractérisé en ce que** les enceintes (19) et les refroidisseurs à air de suralimentation à basse pression (9) peuvent être enlevés des côtés du moteur, entre la première extrémité (17) et la transmission/le générateur (13).
